# EUROPÄISCHE PATENTSCHRIFT

(11) **EP 2 760 559 B1**
(45) Veröffentlichungstag und Bekanntmachung des Hinweises auf die Patenterteilung: **23.01.2019**
(21) Anmeldenummer: 12766095.9
(22) Anmeldetag: 28.09.2012
(51) Int. Cl.: B01D 29/15, B01D 29/52, B01D 29/64, B01D 29/86, B01D 29/90

(54) **VORRICHTUNG ZUM TRENNEN EINES HETEROGENEN STOFFGEMISCHES SOWIE VERFAHREN ZUR REINIGUNG EINER FILTEREINHEIT**
DEVICE FOR SEPARATING A HETEROGENEOUS SUBSTANCE MIXTURE AND METHOD FOR CLEANING A FILTER UNIT
DISPOSITIF DE SÉPARATION D'UN MÉLANGE DE SUBSTANCES HÉTÉROGÈNE, ET PROCÉDÉ DE NETTOYAGE D'UNE UNITÉ DE FILTRATION

(30) Priorität: 30.09.2011 EP 11183584
(43) Veröffentlichungstag der Anmeldung: 06.08.2014
(73) Patentinhaber: BASF SE, 67056 Ludwigshafen am Rhein (DE)
(72) Erfinder: WITTMER, Stefan, 67480 Edenkoben (DE); LINDNER, Jürgen, 67165 Waldsee (DE); WELKER, Gerhard, 74909 Meckesheim (DE); WAGNER, Marcus, 67098 Bad Dürkheim (DE)
(74) Vertreter: BASF IP Association
(86) Internationale Anmeldenummer: PCT/EP2012/069176
(87) Internationale Veröffentlichungsnummer: WO 2013/045605

(56) Entgegenhaltungen:
- DE-A1- 4 326 018
- DE-A1- 10 136 923
- DE-C1- 4 340 218
- FR-A5- 2 159 696
- US-A- 4 269 707

## Beschreibung

Die Erfindung betrifft eine Vorrichtung zum Trennen eines heterogenen Stoffgemisches in mindestens ein Retentat und mindestens ein Filtrat, wobei die Vorrichtung ein Gehäuse, eine Filtereinheit und ein Spülsystem umfasst. Die Erfindung betrifft weiterhin ein Verfahren zum Reinigen einer Filtereinheit, die in einer derartigen Vorrichtung vorgesehen ist.

Zum Trennen von heterogenen Stoffgemischen, insbesondere zum Abscheiden von Feststoffpartikeln aus Flüssigkeiten, werden zahlreiche Verfahren eingesetzt. Die Fest-Flüssig-Trennung wird beispielsweise durch Sedimentieren, Zentrifugieren, Auspressen oder Filtrieren ausgeführt. Beim Filtrieren wird typischerweise ein Filtermedium eingesetzt, das das heterogene Stoffgemisch beim Durchströmen des Filtermediums in ein Retentat und ein Filtrat trennt. Hierbei wird das Retentat vom Filtermedium zurückgehalten und lagert sich an dem Filtermedium an.

Das an der Oberfläche des Filtermediums angesammelte Retentat bildet einen Filterkuchen, der ein Hindernis für den Flüssigkeitsdurchtritt durch das Filtermedium bildet und die Filterwirkung reduziert. Daher wird das Filtermedium beim Betrieb bekannter Vorrichtungen typischerweise regeneriert, indem der Filterkuchen diskontinuierlich oder kontinuierlich entfernt wird. Eine spezielle Form der Regeneration ist die Reinigung, bei der vom Filtermedium gezielt oder unerwünscht zurückgehaltene Retentate wieder entfernt werden.

Die Reinigung kann auf mechanischem Wege durch Bürsten, Kratzer oder Wischer erfolgen, die den Filterkuchen von der Oberfläche des Filtermediums ablösen. Eine derartige Anordnung ist beispielsweise aus DE 39 14 326 A1 bekannt. Weiterhin können Druckstöße, Pulsationen, Gasspülung oder die Spülung mit Wasser oder Chemikalien zum Entfernen des Filterkuchens eingesetzt werden. Andere Verfahren zum Ablösen von Filterkuchen von der Oberfläche des Filtermediums beruhen auf einer Rückspülung mit Filtrat, wobei Filtrat in umgekehrter Richtung durch das Filtermedium geleitet wird.

Aus DE 10 2005 018 886 A1 ist eine Vorrichtung zur Abtrennung von Feststoffen aus Flüssigkeiten bekannt, die Kerzenfilter einsetzt. Die Kerzenfilter sind als Oberflächenfilter ausgebildet und parallel zueinander senkrecht in einem Behälter angeordnet. Weiterhin sieht die Vorrichtung eine Gaszuführvorrichtung vor, die einen Strom von Gasblasen freisetzt, der entlang der äußeren Oberfläche des oder der Kerzenfilter streicht. Die Oberfläche der Kerzenfilter wird während des Betriebes von Gasblasen umspült, um eine lokale Konvektion der Flüssigkeit in der Nähe der Filteroberfläche hervorzurufen und das Abfallen oder Abblättern von an der Oberfläche der Kerzenfilter anhaftendem Filterkuchen zu verursachen oder zumindest zu erleichtern. Weiterhin umfasst die Vorrichtung Filtermodule, die es ermöglichen, die einzelnen Module während des Betriebes durch Gegenstrom zu reinigen.
WO 00/10681 A1 beschreibt eine rückspülbare Filteranordnung, bei der ein Retentatraum und ein Filtratraum durch einen Zwischenboden mit Bohrungen zur Aufnahme von Filterelementen voneinander getrennt sind. Im Retentatraum befindet sich ein Sammelraum, dessen unterer Teil einen Stutzen aufweist, der zur Zuführung und geeigneten Verteilung des Retentats und zur Ableitung der Filterrückstände dient. Die Reinigung der Filterkerzen erfolgt durch eine von der Filtratseite in das Kerzeninnere einströmende Reinigungsflüssigkeit. Die Reinigungsflüssigkeit wird dabei in der der Filtratrichtung entgegengesetzten Richtung durch ein unter Überdruck stehendes gasförmiges Medium von innen nach außen durch die Filterkerzen gepresst.
Bekannte Anlagen zum Trennen eines heterogenen Stoffgemisches verwenden aufwendige Systeme, um die Filtereinheit zu reinigen. US4560483 zeigt eine Vorrichtung für die Filtration von Stoffgemischen, bei der sich die Salze bei der Filtration in kristalliner Form an den Filterkerzen absetzen. Aufgabe der vorliegenden Erfindung ist es, eine Vorrichtung und Verfahren zum Trennen eines heterogenen Stoffgemisches bereitzustellen, mit denen die Reinigung einer Filtereinheit vereinfacht wird und gleichzeitig eine effektive Reinigung erzielt wird. Eine weitere Aufgabe der vorliegenden Erfindung besteht darin, die Reinigung der Filtereinheit sparsam im Verbrauch von Reinigungsmitteln und schonend für die Filtereinheit zu gestalten.
Diese Aufgaben werden erfindungsgemäß gelöst durch eine Vorrichtung zum Trennen eines heterogenen Stoffgemisches in mindestens ein Retentat und ein Filtrat gemäß einer der Ansprüche 1-11, umfassend
- ein Gehäuse, das in einen Raum für das heterogene Stoffgemisch mit mindestens einem Zulauf und einen Filtratraum mit mindestens einem Ablauf unterteilt ist,
- eine Filtereinheit, die mindestens ein Filterelement umfasst, wobei die Filtereinheit in dem Raum für das heterogene Stoffgemisch angeordnet ist, und
- ein Spülsystem zum Reinigen der Filtereinheit,
wobei das Spülsystem mindestens einen Spülstutzen aufweist, der ausgebildet ist, einen tangential zu der Mantelfläche des Gehäuses gerichteten Strom eines ersten Waschmediums in den Raum für das heterogene Stoffgemisch einzubringen.

Die erfindungsgemäße Vorrichtung ermöglicht eine effiziente und schnelle Reinigung der Filtereinheit. Gleichzeitig kann der Bedarf an Waschmedium zur Reinigung der Filtereinheit minimal gehalten werden. Zusätzlich ist durch das Einbringen eines tangential gerichteten Stromes mit mindestens einem Spülstutzen eine schonende Reinigung der Filtereinheit möglich.

Die erfindungsgemäße Vorrichtung kann zum Trennen eines heterogenen Stoffgemisches eingesetzt werden, das mindestens einen Feststoffanteil und mindestens einen gasförmigen und/oder flüssigen Anteil enthält. In der erfindungsgemäßen Vorrichtung wird das heterogene Stoffgemisch in den mindestens einen Feststoffanteil als Retentat und den mindestens einen gasförmigen und/oder flüssigen Anteil als Filtrat getrennt. Insbesondere kann das heterogene Stoffgemisch eine Suspension sein, die einen Feststoffanteil, wie anorganische oder organische Salze in kristalliner Form, in einer Flüssigkeit enthält. Im Falle einer Suspension wird der Feststoffanteil, beispielsweise anorganische oder organische Salze in kristalliner Form, als Retentat abgetrennt. Zusätzlich kann das heterogene Stoffgemisch Filterhilfsmittel wie Pyrophosphat oder Magnesiumsilikat enthalten, die physikalisch-mechanisch die Filtration unterstützen, um insbesondere die Bildung des Filterkuchens in Suspensionen zu fördern. Das Filtrat kann beispielsweise Ethoxilate von Alkoholen, Aminen, Amiden und/oder Säuren enthalten.

In einer Ausführungsform der erfindungsgemäßen Vorrichtung ist die Filtereinheit in das Gehäuse eingebracht, wobei das Gehäuse einen Gehäuseboden, eine Gehäusedecke und eine Mantelfläche umfasst. Hierbei kann die Mantelfläche zylinderförmig ausgestaltet sein, wobei der Querschnitt der Mantelfläche eine kreisförmige, elliptische oder eckige Form aufweisen kann. Bevorzugt ist ein kreisförmiger oder elliptischer Querschnitt.

Das Gehäuse kann aus unterschiedlichen Materialien gefertigt sein, die an den jeweiligen Einsatzbereich für die erfindungsgemäße Vorrichtung angepasst sind. So eignen sich für Anwendungen, in denen ein flüssiges Stoffgemisch filtriert wird, korrosions- und säurebeständige Materialien, wie Stahl, insbesondere rostfreier Edelstahl, Titan, Nickel-Molybdän-Legierungen oder Kunststoffe, insbesondere faserverstärkte Kunststoffe.

Das Gehäuse weist weiterhin mindestens einen Zulauf und mindestens einen Ablauf auf, die beispielsweise als Flanschverbindung ausgestaltet sein können. Durch den mindestens einen Zulauf wird das heterogene Stoffgemisch in das Gehäuse eingeleitet. Nach Durchströmen der im Gehäuse vorgesehenen Filtereinheit wird das Filtrat durch den mindestens einen Ablauf aus dem Gehäuse abgeleitet. Um den Innenraum des Gehäuses in einen Raum für das heterogene Stoffgemisch und einen Filtratraum zu unterteilen, ist die Filtereinheit innerhalb des Gehäuses zwischen dem Zulauf und dem Ablauf angeordnet. Dabei kann die Filtereinheit einen Filterboden umfassen, auf dem das mindestens eine Filterelement so montiert ist, dass dieses in den Raum für das heterogene Stoffgemisch hineinragt und den Raum für das heterogene Stoffgemisch von dem Filtratraum trennt.

Die Filtereinheit kann mindestens ein Filterelement umfassen, das mit einem Filtermedium ausgestattet ist. Das Filterelement kann als Oberflächenfilter oder Tiefenfilter ausgestaltet sein, wobei das Filtermedium so gewählt ist, dass sich beim Durchströmen des heterogenen Stoffgemisches das mindestens eine Retentat, insbesondere der Feststoffanteil, anlagert. Die Filterwirkung des Filterelements wird hierbei maßgeblich durch die Porengröße des Filtermediums bestimmt. Je nach Einsatzgebiet können Filtermedien aus den verschiedensten Materialien, beispielsweise Kunststoffen, Keramiken und/oder Metallen, zum Einsatz kommen. Insbesondere eignen sich als Filtermedium poröse Festkörper, wie Sintermetalle, oder Faserflächengebilde aus Textilien wie Filze oder Vliese, Kunstfasern aus Polyester, Polyphenylensulfid oder Polytetrafluorethylen, keramischen Fasern, Mineralfasern oder Glasfasern. Um Filtermedien aus Faserflächengebilden in die gewünschte Form zu bringen, wird typischerweise ein Träger verwendet, der das Faserflächengebilde stützt.

Insbesondere kann das mindestens eine Filterelement als Filterkerze ausgestaltet sein, die typischerweise eine Zylinderform mit kreisförmiger, elliptischer oder eckiger Grundfläche und einer Länge von mehr als 0,1 m, bevorzugt von 0,5 m bis 2 m aufweisen. Hierbei trennt die Mantelfläche der Filterkerze ein inneres Volumen der Filterkerze von der Umgebung und ist zumindest teilweise mit einem Filtermedium ausgestattet. Auf diese Weise kann das heterogene Stoffgemisch das Filtermedium der Filterkerze von der Umgebung nach innen durchströmen, wobei sich das Retentat an der Mantelfläche anlagert und das Filtrat im inneren Volumen der Filterkerze anfällt. Um das Filtrat ableiten zu können, ist üblicherweise zumindest ein Ende der Filterkerze offen ausgestaltet.

Eine typische Ausführungsform für Filterkerzen sind Wickelkerzen, die gewickelte Fasern oder gewickelte Schichten aus synthetischem oder natürlichem Material umfassen. Andere Filterkerzen können aus Keramik oder Metall, beispielsweise aus Sintermetall oder mehrlagigen Metallgeweben, hergestellt sein. Darüber hinaus gibt es Filterkerzen mit austauschbaren Filtermedien, zum Beispiel bespannbare Filterkerzen, bei denen meist Filtermedien textilen Ursprungs auf einen Träger gespannt werden.

In einer Ausführungsform umfasst die Filtereinheit mindestens ein Filterelement, insbesondere mindestens eine Filterkerze, die im Wesentlichen vertikal innerhalb des Gehäuses, insbesondere in dem Raum für das heterogene Stoffgemisch, angeordnet ist und deren Oberfläche wenigstens zum Teil als Filterfläche dient. Im Wesentlichen vertikal umfasst im vorliegenden Zusammenhang eine Neigung des mindestens einen Filterelements im Bereich von ± 15° gegenüber der Vertikalen. Das mindestens eine Filterelement, insbesondere die mindestens eine Filterkerze, ist vorzugsweise auf dem Filterboden montiert, der beispielsweise eine der Anzahl der Filterelemente entsprechende Anzahl von Öffnungen aufweist. Das mindestens eine Filterelement, insbesondere ausgestaltet als Filterkerze, erstreckt sich somit von dem Filterboden in den Raum für das heterogene Stoffgemisch, wobei das innere Volumen der Filterelemente durch Öffnungen in dem Filterboden mit dem Filtratraum verbunden ist.

Für den Fall, dass die Filtereinheit mehrere Filterelemente umfasst, kann die Anordnung der Filterelemente beliebig gewählt werden, wobei eine effiziente Raumausnutzung im Vordergrund steht. Insbesondere für Gehäuse mit zylinderförmiger Mantelfläche, die einen kreisförmigen oder elliptischen Querschnitt aufweisen, können die Filterelemente ringförmig, sternförmig oder in parallelen Reihen angeordnet sein. Bevorzugt ist eine Anordnung mit möglichst gleichmäßigen Abständen zwischen den Filterkerzen. Unter möglichst gleichmäßigen Abständen wird verstanden, wenn Abweichungen des Abstandes zwischen den Filterkerzen 1/4, bevorzugt 1/8 und besonders bevorzugt 1/16 eines mittleren Abstandes nicht überschreiten, wobei sich der mittlere Abstand aus der Summe der Abstände geteilt durch die Anzahl der Abstände ergibt. Besonders gleichmäßige Abstände zwischen den Filterkerzen können durch eine Anordnung in einer Wabenstruktur erreicht werden kann. Dabei werden die einzelnen Filterkerzen gleichmäßig auf drei nicht benachbarte Ecken der Sechsecke der Wabenstruktur verteilt.

Zwischen der zulauf- und ablaufseitigen Fläche der mindestens einen Filterkerze ist typischerweise eine Druckdifferenz von 0,1 bis 3 bar vorgesehen, um das Strömen des heterogenen Stoffgemisches durch das Filtermedium zu unterstützen. Dabei herrscht in dem Raum für das heterogene Stoffgemisch ein höherer Druck als in dem Filtratraum.

Um die Filterelemente von dem angelagerten Retentat, vorzugsweise einem Feststoffanteil des heterogenen Stoffgemisches, zu befreien und die Filterwirkung wiederherzustellen, sieht die erfindungsgemäß vorgeschlagene Vorrichtung ein Spülsystem vor. Das Spülsystem umfasst mindestens einen Spülstutzen, wobei der Spülstutzen in einer Ausführungsform tangential zu der Mantelfläche des Gehäuses angeordnet ist, um ein erstes Waschmedium in den Raum für das heterogene Stoffgemisch einzubringen. In einer alternativen Ausführungsform ist der mindestens eine Spülstutzen in einem beliebigen Winkel zu der Mantelfläche des Gehäuses angeordnet und umfasst Mittel zum Umlenken des Stromes des ersten Waschmediums. Der Winkel zwischen Spülstutzen und Mantelfläche des Gehäuses liegt dabei zwischen der tangentialen und der orthogonalen Ausrichtung des mindestens einen Spülstutzens. Bevorzugt ist der Spülstutzen im Wesentlichen orthogonal zu der Mantelfläche des Gehäuses angeordnet, wobei im Wesentlichen orthogonal Abweichungen von +/- 15° von der Orthogonalen umfasst. Die Umlenkmittel können beispielsweise als Rohrverlängerung des Spülstutzens in dem Raum für das heterogene Stoffgemisch ausgestaltet sein. Der mindestens eine Spülstutzen kann weiterhin in einem Mantelabschnitt des Gehäuses angeordnet sein, der den Raum für das heterogene Stoffgemisch umschließt.

Der mindestens eine Spülstutzen kann somit einen Strom des ersten Waschmediums bereitstellen, der entlang der Tangente gerichtet ist, die die Mantelfläche des Gehäuses am Ort des mindestens einen Spülstutzens berührt. Der mindestens eine Spülstutzen mündet folglich in dem Raum für das heterogene Stoffgemisch und erzeugt dort durch den tangential gerichteten Strom von erstem Waschmedium eine Zirkularströmung, die das Austragen des Retentats und somit den Spülprozess effizienter gestaltet. Um die Zirkularströmung neben der tangentialen Strömungsausrichtung des mindestens einen Spülstutzens weiter zu unterstützen, kann das Gehäuse zylinderförmig mit kreisförmiger oder elliptischer Grundfläche ausgestaltet sein.

Als erstes Waschmedium kann je nach Anwendungsbereich Wasser, beispielsweise vollentsalztes Wasser, oder ein Lösungsmittel wie Methanol verwendet werden. Insbesondere kann ein erstes Waschmedium gewählt werden, in dem sich das Retentat löst. So lösen sich beispielsweise organische oder anorganische Salze enthaltende Retentate in Wasser. Hierbei begünstigen das Einbringen des ersten Waschmediums mit tangentialer Strömungsausrichtung und die sich daraus ergebende Zirkularströmung zusätzlich die Lösung von Retentaten in dem ersten Waschmedium.

Der mindestens eine Spülstutzen ist vorzugsweise so an der Mantelfläche des Gehäuses angeordnet, dass das Waschmedium auf dem Filterboden in den Bereich für das heterogene Stoffgemisch eingebracht wird. Dazu kann der mindestens eine Spülstutzen an dem Gehäuse in einem unteren Bereich des Mantelabschnitts angeordnet sein, der den Raum für das heterogene Stoffgemisch umschließt. Der untere Bereich des Mantelabschnitts, der den Raum für das heterogene Stoffgemisch umschließt, liegt dabei unterhalb der halben Höhe dieses Mantelabschnitts, bevorzugt unterhalb eines Viertels der Höhe dieses Mantelabschnitts und besonders bevorzugt unterhalb eines Achtels der Höhe dieses Mantelabschnitts. In einer Ausführungsform ist der mindestens eine Spülstutzen so platziert, dass dessen Unterkante ebenerdig zu dem Filterboden ist. Das Einbringen eines ersten Waschmediums im unteren Bereich ist besonders vorteilhaft bei einer vertikalen Anordnung der Filterelemente, da sich das Retentat in dieser Anordnung vorzugsweise im unteren Bereich des Raumes für das heterogene Stoffgemisch, insbesondere auf dem Filterboden, ablagert.

Für das Spülsystem können mehrere Spülstutzen in regelmäßigen und/oder unregelmäßigen Abständen an der Mantelfläche des Gehäuses angeordnet sein. Bevorzugt ist eine regelmäßige Anordnung von Spülstutzen. Dabei kann der Abstand zwischen zwei Spülstutzen am Umfang der Mantelfläche weniger als die Hälfte, vorzugsweise weniger als ein Drittel und besonders bevorzugt weniger als ein Viertel des Umfangs der Mantelfläche betragen. Als Spülstutzen können unterschiedliche Spüldüsen eingesetzt werden, aus denen ein erstes Waschmedium unter einem Druck von 0,1 bar bis 10 bar, bevorzugt von 2 bis 7 bar und besonders bevorzugt von 3 bis 5 austritt. Als Spüldüsen können Flachstrahldüsen oder Vollstrahldüsen eingesetzt werden, mit denen ein Volumenstrom von 0,5 bis 30 m³/h, bevorzugt von 0,5 bis 10 m³/h, zugeführt werden kann.

Zusätzlich oder alternativ zu dem mindestens einen Spülstutzen kann das Spülsystem mindestens eine Sprühdüse umfassen, die sich innerhalb des Gehäuses im Raum für das heterogene Stoffgemisch befindet, um das mindestens eine Filterelement mit einem zweiten Waschmedium zu besprühen. Die mindestens eine Sprühdüse erzeugt dabei einen Druck, unter dem das zweite Waschmedium austritt. Dazu können Sprühdüsen verwendet werden, die das Waschmedium unter einem Druck von 0,1 bis 10 bar, bevorzugt von 2 bis 7 bar und besonders bevorzugt von 3 bis 5 bar abgeben. Zur Erzeugung eines Sprühstrahls kann die mindestens eine Sprühdüse als Flachstrahldüse, Kugelstrahldüse, Hohlkegeldüse, Vollkegeldüse, Tankreinigungsdüse und/oder Rotationsdüse ausgestaltet sein, mit denen einen Volumenstrom von 0,5 bis 30 m³/h, bevorzugt von 0,5 bis 10 m³/h, eingeführt werden kann. Somit wird von der mindestens einen Sprühdüse ein Waschmediumstrahl bereitgestellt, durch den die Oberfläche des mindestens einen Filterelements von angelagertem Retentat befreit wird. Dadurch kann ein zusätzlicher Reinigungseffekt erzielt werden, der durch die Platzierung der mindestens einen Sprühdüse kontrolliert eingesetzt werden kann.

Vorzugsweise entspricht das zweite Waschmedium dem ersten Waschmedium. Das erste und das zweite Waschmedium können jedoch auch unterschiedlich gewählt werden. Beispielsweise kann das erste Waschmedium so gewählt werden, dass sich das Retentat darin löst. Das zweite Waschmedium kann dagegen eine chemische Lösung enthalten, die das Ablösen von Retentat von den Filterelementen unterstützt.

Weiterhin kann die mindestens eine Sprühdüse fixiert oder verschwenkbar gelagert sein. Auch kann die mindestens eine Sprühdüse an unterschiedlichen Orten in dem Raum für das heterogene Stoffgemisch vorgesehen sein. Beispielsweise kann die mindestens eine Sprühdüse an dem Gehäuse, insbesondere der Mantelfläche oder der Gehäusedecke, angebracht sein. Zusätzlich oder alternativ kann die mindestens eine Sprühdüse zwischen mehreren Filterelementen und/oder oberhalb mindestens eines Filterelements platziert sein. Weiter zusätzlich oder alternativ kann die mindestens eine Sprühdüse an einem Haltesystem angeordnet sein, wie es nachfolgend näher beschrieben wird. Dabei kann die mindestens eine Sprühdüse durch weitere Befestigungsmittel am Gehäuse oder an der Filtereinheit selbst befestigt sein.

Vorzugsweise können mehrere Sprühdüsen an mindestens einem Sprühring oder mindestens einem Sprüharm angeordnet sein, der sich in dem Bereich für das heterogene Stoffgemisch befindet, um das mindestens eine Filterelement mit dem zweiten Waschmedium zu besprühen. In einer Ausführungsform des Sprühringes oder des Sprüharmes können Sprühdüsen vorgesehen werden, die als Flachstrahldüse, Kugelstrahldüse, Hohlkegeldüse, Vollkegeldüse, Tankreinigungsdüse und/oder Rotationsdüse ausgestaltet sind. In einer anderen Ausführungsform kann der Sprühring oder der Sprüharm auch ein mit Sprühöffnungen versehenes Rohr sein.

Der mindestens eine Sprühring oder mindestens einem Sprüharm kann zwischen mehreren Filterelementen und/oder oberhalb mindestens eines Filterelements platziert sein. Insbesondere können mehrere Sprühringe oder Sprüharme an unterschiedlichen Orten in dem Raum für das heterogene Stoffgemisch vorgesehen sein. Wenn mehrere Sprühringe oder Sprüharme verwendet werden, können diese eine unterschiedliche Anzahl von Sprühdüsen und unterschiedliche Durchmesser oder Länge aufweisen. Auch die Form des Sprühringes kann jede beliebige Form annehmen und insbesondere an die Anordnung der Filterelemente angepasst sein. Beispielsweise kann im Falle einer kreisförmigen Anordnung der Filterelemente eine kreisförmige Form des Sprühringes vorteilhaft sein. In ähnlicher Weise kann für die Anordnung der Filterkerzen in einer Wabenstruktur eine sechseckige Form des Sprühringes vorteilhaft sein.

In einer bevorzugten Ausführungsform sind mindestens zwei Sprühringe, mindestens zwei Sprüharme oder eine Kombination hieraus vorgesehen, wobei sich mindestens einer der Sprühringe oder mindestens einer der Sprüharme oberhalb der Filtereinheit befindet und mindestens ein weiterer Sprühring oder eine weiterer Sprüharm innerhalb der Filtereinheit, insbesondere zwischen den Filterelementen, angeordnet ist. Hierbei weist der mindestens eine Sprühring oberhalb der Filtereinheit vorzugsweise einen größeren Durchmesser auf als der mindestens eine weitere Sprühring innerhalb der Filtereinheit. Eine entsprechende Anordnung der Sprühdüsen kann auch durch Sprüharme realisiert sein, die in einem Raum zwischen den Filterelementen der Filtereinheit verlaufen.

In einer Ausführungsform mit mindestens zwei Sprühringen entspricht der Durchmesser des mindestens einen Sprührings oberhalb der Filtereinheit höchstens der maximalen Ausdehnung der Filtereinheit. Bevorzugt liegt der Durchmesser zwischen der Hälfte und drei Vierteln der maximalen Ausdehnung der Filtereinheit. Auf diese Weise kann der mindestens eine Sprühring oberhalb der Filtereinheit über die volle Länge der Filterelemente einen Reinigungseffekt erzielen. Zusätzlich kann der mindestens eine weitere Sprühring innerhalb der Filtereinheit einen Reinigungseffekt zwischen den Filterelementen erzielen beziehungsweise den Reinigungseffekt des mindestens einen Sprührings oberhalb der Filtereinheit nochmals verstärken.

Das durch das Spülsystem abgetragene Retentat kann durch einen separaten Ablauf als Abwasser aus dem Raum für das heterogene Stoffgemisch abgeführt werden. Bei in dem Waschmedium lösbaren Retentaten kann der Ablauf für das Filtrat im Filtratraum zum Austragen des abgetragenen Retentates verwendet werden. In einer Ausführungsform wird das Spülsystem zum Reinigen der Filter in zeitlichen Abständen betrieben. So kann das Spülsystem nach der Trennung einer oder mehrerer Chargen von heterogenem Stoffgemisch betrieben werden, um den Filterkuchen abzutragen, der sich während der Trennung des heterogenen Stoffgemisches an den Filterelementen angelagert hat.

Es hat sich weiterhin als vorteilhaft erwiesen, die Filtereinheit mit mindestens einem Haltesystem innerhalb des Raumes für das heterogene Stoffgemisch zu fixieren. Denn insbesondere bei vertikal angeordneten Filterelementen kann die Länge der Filterelemente die Stabilität beeinflussen. Daher sieht die erfindungsgemäße Vorrichtung mindestens ein Haltesystem vor, das die Filtereinheit innerhalb des Raumes für das heterogene Stoffgemisch fixiert. Hierbei hängt die Ausgestaltung des Haltesystems von der Filterlänge und der Beschaffenheit des Filterbodens als Trägereinheit ab. Zusätzlich können mehrere Haltesysteme in unterschiedlichen Höhen entlang der Filter vorgesehen sein.

Vorzugsweise ist das Haltesystem so ausgestaltet, dass das mindestens eine Filterelement der Filtereinheit fixiert wird. Dazu kann das Haltesystem das mindestens eine Filterelement in einem oberen Bereich fixieren. Hierbei bezeichnet der obere Bereich des mindestens einen Filterelements einen Bereich, der sich an dem Ende des Filterelements erstreckt, das dem Filterboden gegenüberliegt. Der obere Bereich des Filterelements erstreckt sich dabei maximal bis zur Hälfte des Filterelements. Bevorzugt ist das mindestens eine Haltesystem in einem oberen Viertel, besonders bevorzugt in einem oberen Achtel des mindestens einen Filterelements vorgesehen. Weiterhin kann das mindestens eine Haltesystem zur eigenen Befestigung mit dem Gehäuse, insbesondere der Mantelfläche verbunden sein.

In einer bevorzugten Ausführungsform ist das mindestens eine Haltesystem als offenes Haltesystem ausgestaltet. Ein offenes Haltesystem erlaubt insbesondere in der Kombination mit einem Spülsystem, wie vorstehend beschrieben, dass das versprühte Waschmedium aus jeder Position im Raum für das heterogene Stoffgemisch die Filterelemente erreichen kann.

Das offene Haltesystem kann mindestens eine Hülse umfassen, die das mindestens eine Filterelement zumindest teilweise umgreift. Dabei entspricht die Anzahl der Hülsen vorzugsweise der Anzahl der Filterelemente. So kann eine Hülse jeweils ein Filterelement umgreifen. Dabei können mehrere Hülsen die jeweiligen Filterelemente in gleichen oder unterschiedlichen Höhen umgreifen. Durch die Hülsen wird ein Punktkontakt zwischen den Filterelementen und dem Haltesystem vermieden und eine flächige Abstützung erreicht. Dies schont die Filterelemente und erhöht deren Standzeit. Zusätzlich kann die Ausdehnung der Hülse entlang der Filterelemente möglichst klein gehalten werden, um die nutzbare Filterfläche nicht zu verringern. Dazu kann die Hülse auch so ausgestaltet sein, dass die Hülse das Filterelement nur teilweise am Umfang umgreift. Vorzugsweise umgreift die Hülse jedoch mehr als die Hälfte des Umfangs des Filterelements.

Neben der mindestens einen Hülse kann das mindestens eine Haltesystem mindestens einen Steg umfassen, wobei ein oder mehrere Stege mindestens eine Hülse mit dem Gehäuse verbinden und/oder ein oder mehrere Stege mindestens zwei Hülsen miteinander verbinden. Auch kann ein Steg eine Hülse mit einem weiteren Steg verbinden. Die Stege können beispielsweise die mindestens eine Hülse mit dem Gehäuse verbinden. Bei mehreren Hülsen können ein oder mehrere Stege die Hülsen miteinander verbinden. Zusätzlich oder alternativ können ein oder mehrere Stege das System aus mehreren Hülsen mit dem Gehäuse verbinden. Dies ermöglicht eine offene Bauweise für das Haltesystem, so dass von dem Spülsystem versprühtes Waschmedium die Filterelemente erreichen kann.

In einer Ausführungsform ist die mindestens eine Sprühdüse des Spülsystems an dem Haltesystem angeordnet. So kann mindestens eine Sprühdüse an den Hülsen oder Stegen des Haltesystems montiert sein. Diese Ausgestaltung ist besonders einfach, da weitere Mittel zum Haltern der mindestens einen Sprühdüse überflüssig sind.

Weiterhin werden die oben genannten Aufgaben erfindungsgemäß gelöst durch ein Verfahren zum Reinigen einer Filtereinheit, die in einem Gehäuse vorgesehen ist und einen Raum für ein heterogenes Stoffgemisch von einem Filtratraum trennt, wobei ein erstes Waschmedium mit mindestens einem tangential an der Mantelfläche des Gehäuses angeordneten Spülstutzen in den Raum für das heterogene Stoffgemisch eingebracht wird.

Das erfindungsgemäße Verfahren dient vorzugsweise zum Reinigen einer Filtereinheit mit mindestens einem Filterelement, die Teil der vorstehend beschriebenen Vorrichtung ist. Durch das Einbringen eines ersten Waschmediums mit mindestens einem tangential am Gehäuse ausgerichteten Spülstutzen wird eine Zirkularströmung erzeugt, die das Austragen des Retentates und somit den Spülprozess effizienter gestaltet. Um die Zirkularströmung neben der tangentialen Ausrichtung des mindestens einen Spülstutzens weiter zu unterstützen, kann das Gehäuse eine zylinderförmige Mantelfläche mit kreisförmigem oder elliptischem Querschnitt umfassen. Vorzugsweise bringt der mindestens eine Spülstutzen das erste Waschmedium auf einen Filterboden in dem Raum für das heterogene Stoffgemisch ein, um eine Zirkularströmung des ersten Waschmediums zu erzeugen.

Zusätzlich oder alternativ zum Einbringen eines ersten Waschmediums durch mindestens einen Spülstutzen kann die Filtereinheit über mindestens eine Sprühdüse, die sich im Raum für das heterogene Stoffgemisch befindet, mit einem zweiten Waschmedium besprüht werden. Dabei sind die Sprühdüsen so ausgestaltet, dass ein mechanischer Reinigungseffekt erzielt wird und das Reinigen der Filtereinheit gegebenenfalls weiter begünstigt. Insbesondere kann die Reinigungswirkung der mindestens einen Sprühdüse durch die Platzierung im Raum für das heterogene Stoffgemisch kontrolliert werden. Insbesondere kann die Filtereinheit über mindestens eine Sprühdüse, die an mindestens einem Sprühring angeordnet ist, mit einem zweiten Waschmedium besprüht werden.

Die mindestens eine Sprühdüse erzeugt vorzugsweise einen Strahl des zweiten Waschmediums, der unter einem Druck aus der Sprühdüse austritt. Dazu können Sprühdüsen verwendet werden, die das Waschmedium unter einem Druck von mehr als 0,1 bar, bevorzugt von 2 bis 7 bar und besonders bevorzugt von 3 bis 5 bar abgeben. Zur Erzeugung eines Sprühstrahls kann die mindestens eine Sprühdüse als Flachstrahldüse, Kugelstrahldüse, Hohlkegeldüse, Vollkegeldüse, Tankreinigungsdüse und/oder Rotationsdüse ausgestaltet sein, mit denen Volumenstrom von 0,5 bis 30 m³/h, bevorzugt von 0,5 bis 10 m³/h, zugeführt werden kann. Somit wird von der mindestens einen Sprühdüse ein Waschmediumstrahl bereitgestellt, durch den die Oberfläche des mindestens einen Filterelements von angelagertem Retentat befreit wird.

Als erstes beziehungsweise zweites Waschmedium kann je nach Anwendungsbereich Wasser, insbesondere vollentsalztes Wasser, oder Lösungsmittel, wie Methanol, verwendet werden. Insbesondere kann das erste Waschmedium so gewählt werden, dass sich das Retentat in dem ersten Waschmedium löst. So lösen sich beispielsweise Retentate wie die meisten Salze in Wasser. Hierbei begünstigt das Einbringen des ersten Waschmediums mit mindestens einem tangential am Gehäuse angeordneten Spülstutzen und die sich daraus ergebende Zirkularströmung zusätzlich die Lösung von Retentaten in dem ersten Waschmedium. Das zweite Waschmedium dient maßgeblich der mechanischen Reinigung durch die mindestens eine Sprühdüse, wobei der Aspekt der Löslichkeit des Retentates in dem zweiten Waschmedium in den Hintergrund rückt. Das zweite Waschmedium kann sich daher von dem ersten Waschmedium unterscheiden. Um zusätzlichen Aufwand zu sparen, ist es meist zweckmäßig, ein Waschmedium für das gesamte Spülsystem, das heißt für den mindestens Spülstutzen und für die mindestens eine Sprühdüse, zu verwenden.

Das Spülsystem kann weiterhin so betrieben werden, dass der mindestens eine Spülstutzen und die mindestens eine Sprühdüse gleichzeitig und/oder sequenziell zum Reinigen der Filtereinheit, insbesondere das mindestens eine Filterelement, eingesetzt werden. Beispielsweise kann es vorteilhaft sein, die Filtereinheit, insbesondere das mindestens eine Filterelement, zunächst mit der mindestens einen Sprühdüse zu reinigen, um angelagerte Retentate abzulösen. Anschließend kann durch den Einsatz des mindestens einen Spülstutzens das abgelöste Retentat in dem Waschmedium gelöst und ausgetragen werden.

Anhand von Zeichnungen wird die Erfindung nachstehend näher erläutert.

Es zeigen:
- Figur 1: eine schematische Darstellung einer erfindungsgemäßen Vorrichtung zum Trennen eines heterogenen Stoffgemisches in der Seitenansicht,
- Figur 2: eine schematische Darstellung der erfindungsgemäßen Vorrichtung gemäß Figur 1 in der Draufsicht umfassend Sprühringe,
- Figur 3: eine weitere Ausführungsform der Spülstutzen gemäß Figur 2, und
- Figur 4: eine Detailansicht des Haltesystems in der Seitenansicht,
- Figur 5: eine schematische Darstellung der erfindungsgemäßen Vorrichtung gemäß Figur 1 in der Draufsicht umfassend Sprüharme.

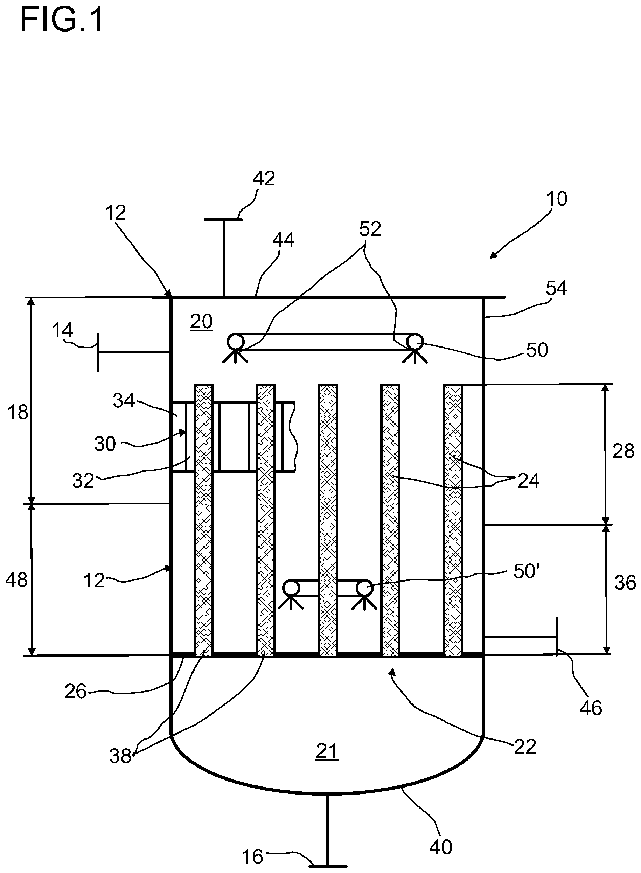

Figur 1 zeigt in schematischer Darstellung eine Schnittansicht der erfindungsgemäßen Vorrichtung 10. Die erfindungsgemäße Vorrichtung 10 ist nicht auf ein Anwendungsgebiet beschränkt und kann mit beliebigen heterogenen Stoffgemischen, die einen Feststoffanteil und einen Flüssiganteil enthalten, eingesetzt werden. Beispielsweise kann die erfindungsgemäße Vorrichtung 10 zur Aufbereitung von Brauchwasser in der chemischen und mechanischen Industrie verwendet werden.

Die erfindungsgemäße Vorrichtung 10 umfasst ein Gehäuse 12 mit im Wesentlichen zylinderförmiger Mantelfläche sowie einen Zulauf 14 und einen Ablauf 16. Das Gehäuse 12 ist weiterhin in einen Raum für das heterogene Stoffgemisch Raum 20 und einen Filtratraum 21 unterteilt. Der Zulauf 14 befindet sich im oberen Bereich 18 des Gehäuses 12, wobei ein heterogenes Stoffgemisch durch den Zulauf 14 in den Raum für das heterogene Stoffgemisch 20 eingeführt wird.

In dem Gehäuse 12 ist eine Filtereinheit 22 eingebracht, die mehrere Filterkerzen 24 auf einem Filterboden 26 umfasst. Die Filterkerzen 24 sind typischerweise als zylinderförmige Filterelemente ausgebildet, wobei ein Filtermedium, wie ein Flächengebilde aus Kunststoff, Keramik und/oder Metall, schichtweise auf einen Träger gewickelt oder gespannt sein kann. Im unteren Bereich 36 sind die Filterkerzen 24 auf einem Filterboden 26 montiert, der beispielsweise eine der Anzahl der Filterkerzen 24 entsprechende Anzahl von Löchern 38 aufweist. Diese bilden den Ablauf der Filterkerzen 24, deren Filterwirkung folglich bei einem Durchströmen von außen, also dem Raum für das heterogene Stoffgemisch, nach innen eintritt.

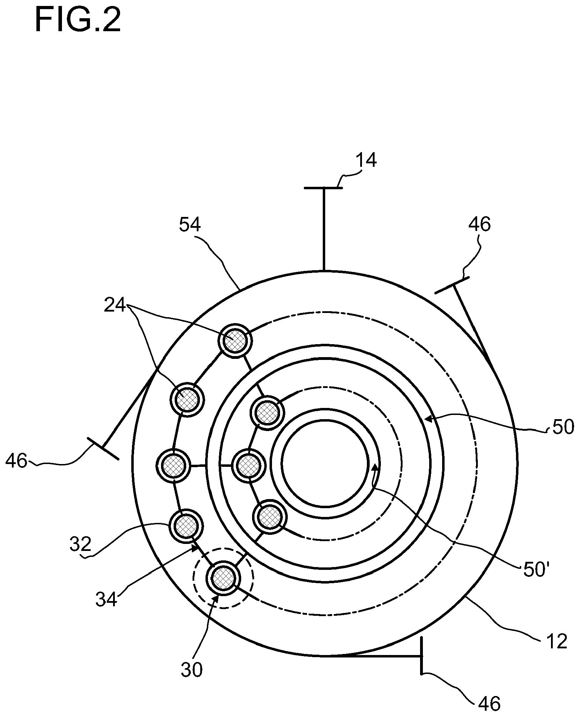

Aufgrund der länglichen Ausdehnung der Filterkerzen 24 und deren vertikaler Anordnung im Gehäuse 12 ist weiterhin im oberen Bereich 28 der Filterkerzen 24 ein Haltesystem 30 vorgesehen, das die Filterkerzen 24 innerhalb des Gehäuses 12 fixiert. Im oberen Bereich 28 werden die Filterkerzen 24 durch ein System aus Hülsen 32 gehalten, die die einzelnen Filterkerzen 24 umgreifen. Die Hülsen 32 sind, wie in Figur 2 gezeigt, durch Stege 34 miteinander und mit dem Gehäuse 12 verbunden.

Durchströmt ein heterogenes Stoffgemisch, das beispielsweise eine Suspension sein kann, die Filterkerzen 24, wird dieses im Wesentlichen in einen Feststoffanteil als Retentat und einen Flüssiganteil als Filtrat getrennt. Dabei fällt der Feststoffanteil, beispielsweise ein ungelöstes Salz, als Filterkuchen außerhalb der Filterkerzen 24 an und der Flüssiganteil wird als Filtrat in das Innere der Filterkerzen 24 geleitet. Über den Ablauf 16 am Gehäuseboden 40 wird das Filtrat aus der Vorrichtung 10 ausgeführt. Weiterhin ist eine Entlüftungsöffnung 42 an der Gehäusedecke 44 vorgesehen, um die Druckdifferenz zwischen zulauf- und ablaufseitigen Fläche der Filterkerzen 24 entsprechend einzustellen.

Beim Filtrieren lagert sich das Retentat oberflächlich als Filterkuchen an den Filterkerzen 20 an und reduziert den Filterwirkungsgrad. Zur Regeneration der Filterkerzen 24, das heißt zum Abtragen des Filterkuchens, ist ein Spülsystem vorgesehen. Das Spülsystem umfasst tangential im unteren Bereich 48 des Gehäuses 12 angeordnete Spülstutzen 46, die in den Raum für das heterogene Stoffgemisch 20 münden und ein Waschmedium, beispielsweise Wasser, in das Gehäuse 12 einleiten. Die Spülstutzen 46 erzeugen durch die tangentiale Ausrichtung eine Zirkularströmung im unteren Bereich 48 des Gehäuses 12, was den Lösungs-, Spül- und/oder Austragprozess des Filterkuchens unterstützt.

Das Spülsystem umfasst weiterhin Spülringe 50, 50', die sich innerhalb der Raumes für das heterogene Stoffgemisch 20 befinden. Die Spülringe 50, 50' sind so ausgestaltet, dass durch Besprühen der Filterkerzen 24 mit einem Waschmedium, beispielsweise Wasser, der Filterkuchen mechanisch abgetragen wird. In der in Figur 1 gezeigten Ausführungsform sind zwei Sprühringe 50, 50' mit Sprühdüsen 52 vorgesehen, wobei sich ein Sprühring 50 oberhalb der Filterkerzen 24 befindet und ein weitere Sprühring 50' zwischen den Filterkerzen 24 eingebracht ist. Die Sprühringe 50, 50' können dabei mittels geeigneter Halter an dem Gehäuse 12 oder an den Filterkerzen 24 befestigt sein.

In der in Figur 1 dargestellten Ausführungsform weist der Sprühring 50 oberhalb der Filterkerzen 24 einen größeren Durchmesser auf als der Sprühring 50', der sich zwischen den Filterkerzen 24 befindet. Die Anordnung der Sprühringe 50, 50' und deren Durchmesser kann aber an jede Anordnung von Filterkerzen 24 angepasst werden, so dass eine optimale mechanische Reinigungswirkung erreicht wird. Die Sprühdüsen 52 der Sprühringe 50, 50' sind in der in Figur 1 dargestellten Ausführungsform so ausgerichtet, dass das Waschmedium nach unten zum Gehäuseboden 40 hin versprüht wird. Im Allgemeinen kann die Ausrichtung der Sprühdüsen 52 verschwenkbar sein oder je nach Positionierung und Anzahl der Sprühringe 50, 50' so gewählt werden, dass eine optimale Reinigungswirkung erzielt wird.

Figur 2 zeigt in einer schematischen Darstellung die erfindungsgemäße Vorrichtung 10 aus Figur 1 in der Draufsicht umfassend Sprühringe 50, 50'. Durch den Zulauf 14 am Gehäuse 12 wird das zu trennende, heterogene Stoffgemisch in den Raum für das heterogene Stoffgemisch 20 eingeleitet. Dort befindet sich die Filtereinheit 22, die mehrere im Gehäuse 12 befestigte Filterkerzen 24 umfasst. Im unteren Bereich 36 sind die Filterkerzen 24 in einem Filterboden 26 montiert, der beispielsweise eine der Anzahl der Filterkerzen 24 entsprechende Anzahl von Löchern 38 aufweist.

Im oberen Bereich 28 werden die Filterkerzen 24 aufgrund ihrer Länge durch ein Haltesystem 30 nochmals fixiert. Das Haltesystem 30 umfasst Hülsen 32, die die einzelnen Filterkerzen 24 am Umfang umgreifen. Dadurch werden die Filterkerzen 24 flächige belastet und somit in schonender Art und Weise in Position gehalten. Damit die Reinigungswirkung des Spülsystems, insbesondere der Sprühringe 50, 50', nicht beeinträchtigt wird, ist das Haltesystem 30 offen ausgestaltet, indem die Hülsen 32 durch Stege 34 miteinander verbunden sind. Die durch Stege 34 miteinander verbundenen Hülsen 32 sind zusätzlich durch geeignete Mittel, beispielsweise weitere Stege 34, an dem Gehäuse 12 befestigt. So kann das Haltesystem beispielsweise durch weitere Stege 34 an der Mantelfläche 54 des Gehäuses 12, dem Gehäuseboden 40 oder der Gehäusedecke 44 fixiert sein.

Weiterhin ist die Vorrichtung 10 mit einem Spülsystem 46, 50, 50' ausgestattet, das den durch die Filterwirkung an den Filterkerzen 24 anfallenden Filterkuchen abträgt. Das Spülsystem 46, 50, 50' umfasst Spülstutzen 46, die tangential an der Mantelfläche 54 des zylindrischen Gehäuses 12 angeordnet sind. In der, in Figur 2 dargestellten Ausführungsform, sind insgesamt drei Spülstutzen 46 regelmäßig an der zylindrischen Mantelfläche 54 des Gehäuses 12 angeordnet. Diese Ausgestaltung ermöglicht es, einen verbesserten Spülprozess mit erhöhter Lösungs- und Austragfähigkeit bereitzustellen.

Im Allgemeinen kann die Anzahl und die Anordnung der Spülstutzen 46 beliebig an die gewünschte Reinigungswirkung angepasst werden. So können die Spülstutzen 46 in regelmäßigen oder unregelmäßigen Abständen an der zylindrischen Mantelfläche 54 des Gehäuses 12 angeordnet sein.

Neben den Spülstutzen 46 umfasst das Spülsystem 46, 50, 50' Sprühringe 50, 50' mit Sprühdüsen 52, die sich im Raum für das heterogene Stoffgemisch 20 befinden. Die Sprühringe 50, 50' mit Sprühdüsen 52 tragen durch Besprühen der Filterkerzen 24 mit einem Waschmedium, beispielsweise Wasser, den Filterkuchen mechanisch ab. In der hier dargestellten Ausführungsform sieht das Spülsystem 46, 50, 50' zwei Sprühringe 50, 50' mit Sprühdüsen 52 vor, die unterschiedliche Durchmesser aufweisen. Dabei ist der Sprühring 50' mit dem kleineren Durchmesser zwischen den Filterkerzen platziert und der Sprühring 50 mit dem größeren Durchmesser als Sprühring 50' befindet sich oberhalb der Filterkerzen 24.

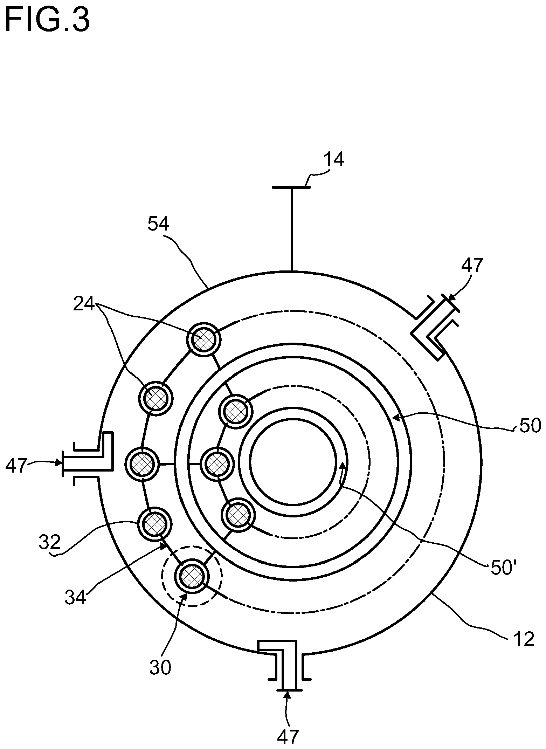

In Figur 3 ist eine alternative Ausführungsform der Spülstutzen 47 des Spülsystems 46, 47, 50, 50' dargestellt. Die Spülstutzen 47 sind orthogonal in die Mantelfläche 54 des Gehäuses 12 eingeführt und umfassen Mittel zum tangentialen Umlenkung des Stromes von erstem Waschmedium. Die Umlenkmittel 58, der in Figur 3 gezeigten Ausführungsform, sind als Rohrverlängerung 60 der Spülstutzen 47 ausgestaltet, die in dem Raum für das heterogene Stoffgemisch hineinragen. So wird auf einfache Weise ein Zirkularstrom aus einem tangentialen Strom von Waschmedium erzeugt, der einen verbesserten Spülprozess mit erhöhter Lösungs- und Austragfähigkeit bereitstellt.

Die in den Figuren 2 und 3 dargestellten Ausführungsformen können auch in Kombination verwendet werden, wobei die Spülstutzen regelmäßig oder unregelmäßig an der zylindrischen Mantelfläche 54 des Gehäuses 12 angeordnet sein können.

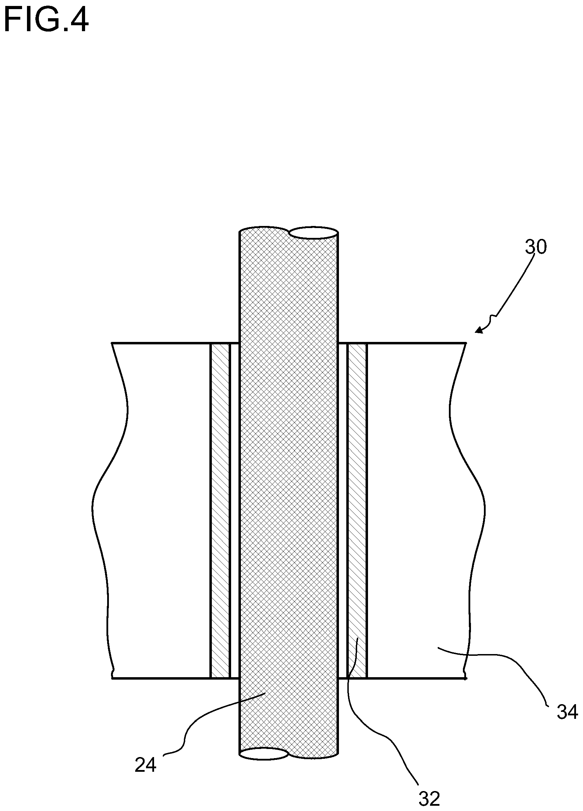

Figur 4 zeigt eine Detailansicht des vorstehend beschriebenen Haltesystems 30, das durch Stege 34 miteinander verbundene Hülsen 32 umfasst und die Filterkerzen 24 zusammen mit dem Filterboden 26 innerhalb des Gehäuses 12 fixiert. Die Hülsen 30 weisen dazu einen Innenumfang auf, der dem Außenumfang der Filterkerzen 24 im Wesentlichen entspricht. Somit können die Hülsen die Filterkerzen 24 am Umfang umgreifen. Zwischen den einzelnen die Filterkerzen 24 umgreifenden Hülsen 32 sind weiterhin Stege 34 vorgesehen, die die einzelnen Hülsen 32 miteinander verbinden. Das so ausgebildete System aus Hülsen 32 und Stegen 34 kann durch weitere Stege 34 an dem Gehäuse 12, beispielsweise der Mantelfläche 54 des Gehäuses 12, dem Gehäuseboden 40 oder der Gehäusedecke 44, befestigt sein. Die Stege 34 können als Stegblech ausgestaltet sein, das zwischen den Hülsen 32 verläuft. Auf diese Weise kann ein offenes Haltesystem 30 geschaffen werden, das die Reinigungswirkung des Spülsystems 46, 50, 50', insbesondere eines oberhalb der Filterkerzen 24 angeordneten Sprühringes 50, nicht beeinflusst.

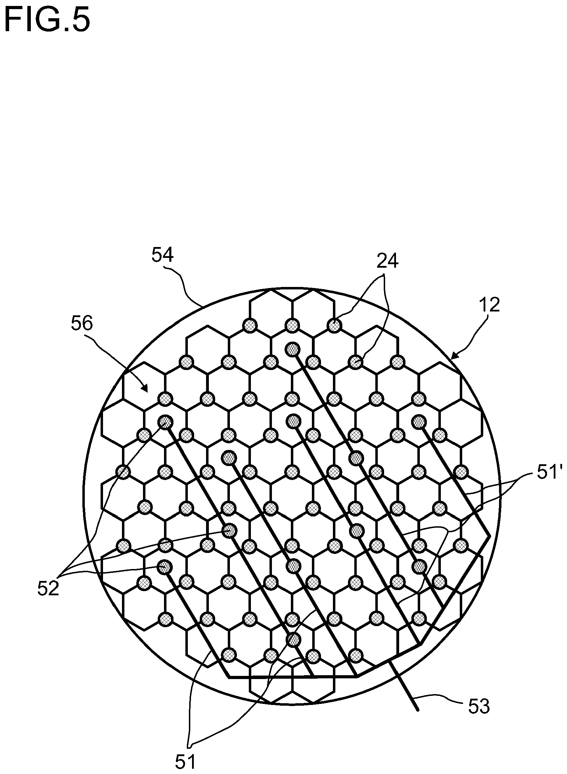

Figur 5 zeigt in schematischer Darstellung die erfindungsgemäße Vorrichtung 10 aus Figur 1 in der Draufsicht umfassend Sprüharme 51,51'. Dabei entspricht die Ausführungsform der Figur 5 im Wesentlichen der in Figur 2 gezeigten Draufsicht. Im Unterschied zu Figur 2 sind die Sprühdüsen an Sprüharmen 51, 51' vorgesehen, die von einem gemeinsamen Anschluss 53 aus versorgt werden. Weiterhin ist in Figur 5 die Anordnung der Filterelemente 24 in einer Wabenstruktur 56 illustriert. Die Spülstutzen 46, 47 sind zur besseren Übersicht nicht dargestellt.

### Beispiele

Filter ohne das erfindungsgemäße Reinigungssystem:
Für einen Filter mit einem Reinigungssystem gemäß dem Stand der Technik wird eine Reinigungszeit von ca. 2 Std mit ca. 10 m³ Wasser benötigt. Um einen gewünschten Reinigungsgrad zu erlangen, wird der Filter anschließend geöffnet und die Kerzen werden mit Hilfe einer Schlauchleitung abgespült. Dieser Reinigungsschritt dauert ca. 1 Std. und verbraucht ca. 1 m³ Wasser. Somit gestaltet sich die Reinigung insgesamt als zeitaufwendig und ist mit weiteren Gefahren verbunden, da der Filter mit heißem Wasser gereinigt wird.

Filter mit erfindungsgemäßem Reinigungssystem:
Für einen Filter mit einem erfindungsgemäßen Reinigungssystem umfassend tangential an der Mantelfläche angeordnete Spülstutzen und zwei Sprühringe in unterschiedlichen Höhen beträgt die Reinigungszeit ca. 1 Std mit ca 5 m³ Wasser. Öffnen und Schließen des Filters entfällt, da die Kerzen komplett durch das eingebrachte Düsensystem gereinigt sind. So kann der Filter auf effiziente Weise mit dem gewünschten Reinigungsergebnis gereinigt werden. Insbesondere werden der Zeitaufwand und der Wasserverbrauch gegenüber dem Stand der Technik drastisch verringert.

### Bezugszeichenliste

- 10: Vorrichtung zum Trennen eines heterogenen Stoffgemisches
- 12: Gehäuse
- 14: Zulauf
- 16: Ablauf
- 18: oberer Bereich des Gehäuses
- 20: Raum für das heterogene Stoffgemisch
- 22: Filtereinheit
- 24: Filterkerze
- 26: Filterboden
- 28: oberer Bereich der Filterkerze
- 30: Haltesystem
- 32: Hülse
- 34: Steg
- 36: unterer Bereich der Filterkerze
- 38: Loch im Filterboden
- 40: Gehäuseboden
- 42: Entlüftungsöffnung
- 44: Gehäusedecke
- 46: Spülstutzen
- 47: Spülstutzen
- 48: unterer Bereich des Gehäuses
- 50, 50': Sprühringe
- 51, 51': Sprüharme
- 52: Sprühdüse
- 53: Anschluss Sprüharme
- 54: Mantelfläche
- 56: Wabenstruktur

## Patentansprüche

1. Vorrichtung (10) zum Trennen eines heterogenen Stoffgemisches in mindestens ein Retentat und ein Filtrat, umfassend
- ein Gehäuse (12), das in einen Raum für das heterogene Stoffgemisch (20) mit mindestens einem Zulauf (14) und einen Filtratraum (21) mit mindestens einem Ablauf (16) unterteilt ist, wobei das Gehäuse eine Mantelfläche (54) umfasst, die den Raum für das heterogene Stoffgemisch (20) umschließt und die Mantelfläche zylinderförmig mit einem kreisförmigen oder elliptischen Querschnitt ausgestaltet ist,
- eine Filtereinheit (22), die in dem Raum für das heterogene Stoffgemisch (20) angeordnet ist und mehrere Filterkerzen (24) umfasst, die im Wesentlichen vertikal innerhalb des Gehäuses angeordnet sind und deren Oberfläche wenigstens zum Teil als Filterfläche dient, wobei die Filtereinheit (22) einen Filterboden (26) umfasst, auf dem die Filterkerzen (24) so montiert sind, dass diese in den Raum für das heterogene Stoffgemisch (20) hineinragen und den Raum für das heterogene Stoffgemisch (20) von dem Filtrat trennen, und
- ein Spülsystem (46, 47, 50, 50') zum Reinigen der Filtereinheit (22),
**dadurch gekennzeichnet, dass** das Spülsystem (46, 47, 50, 50') mindestens einen Spülstutzen (46, 47) aufweist, der an dem Gehäuse (12) in einem unteren Bereich des Mantelabschnitts (48) angeordnet ist und ausgebildet ist, ein erstes Waschmedium in einem tangential zu der Mantelfläche (54) des Gehäuses (12) gerichteten Strom auf den Filterboden in den Raum für das heterogene Stoffgemisch einzubringen.

2. Vorrichtung gemäß Anspruch 1, **dadurch gekennzeichnet, dass** der mindestens eine Spülstutzen (46, 47) tangential zu der Mantelfläche (54) des Gehäuses (12) ausgerichtet ist.

3. Vorrichtung gemäß einem der Ansprüche 1 oder 2, **dadurch gekennzeichnet, dass** der mindestens eine Spülstutzen (46, 47) in einem beliebigen Winkel zu der Mantelfläche (54) des Gehäuses (12) angeordnet ist und Mittel zum Umlenken des Stromes des ersten Waschmediums umfasst.

4. Vorrichtung gemäß einem der Ansprüche 1 bis 3, **dadurch gekennzeichnet, dass** mehrere Spülstutzen (46, 47) in regelmäßigen und/oder unregelmäßigen Abständen an der Mantelfläche (54) des Gehäuses (12) angeordnet sind.

5. Vorrichtung gemäß einem der Ansprüche 1 bis 4, **dadurch gekennzeichnet, dass** das Spülsystem (46, 47, 50, 50') mindestens eine Sprühdüse (52) umfasst, die sich innerhalb des Gehäuses (12) im Raum für das heterogene Stoffgemisch (20) befindet.

6. Vorrichtung gemäß Anspruch 5, **dadurch gekennzeichnet, dass** die mindestens eine Sprühdüse (52) fixiert oder verschwenkbar gelagert ist.

7. Vorrichtung gemäß einem der Ansprüche 5 oder 6, **dadurch gekennzeichnet, dass** die mindestens eine Sprühdüse (52) zwischen mehreren Filterelementen (24) und/oder oberhalb mindestens eines Filterelements (24) platziert ist.

8. Vorrichtung gemäß einem der Ansprüche 5 bis 7, **dadurch gekennzeichnet, dass** mehrere Sprühdüsen (52) an mindestens einem Sprühring (50, 50') oder an mindestens einem Sprüharm (51,51') angeordnet sind, der sich in dem Raum für das heterogene Stoffgemisch (20) befindet.

9. Vorrichtung gemäß einem der Ansprüche 1 bis 8, **dadurch gekennzeichnet, dass** die Filtereinheit (22) mit mindestens einem Haltesystem (30) innerhalb des Raumes für das heterogene Stoffgemisch (20) fixiert ist, wobei das mindestens eine Haltesystem (30) als offenes Haltesystem (30) ausgestaltet ist.

10. Vorrichtung gemäß Anspruch 9, **dadurch gekennzeichnet, dass** das mindestens eine Haltesystem (30) mindestens eine Hülse (32) umfasst, die das mindestens eine Filterelement (24) zumindest teilweise umgreift.

11. Vorrichtung gemäß einem der Ansprüche 9 oder 10, **dadurch gekennzeichnet, dass** das mindestens eine Haltesystem (30) mindestens einen Steg (34) umfasst, wobei ein oder mehrere Stege (34) mindestens eine Hülse (32) mit dem Gehäuse (12) verbinden und/oder ein oder mehrere Stege (34) mindestens zwei Hülsen (34) miteinander verbinden.

12. Verfahren zum Reinigen einer Filtereinheit (22), die in einem Gehäuse (12) vorgesehen ist, wobei das Gehäuse (12) eine Mantelfläche (54) umfasst, die einen Raum für das heterogene Stoffgemisch (20) umschließt und die Mantelfläche (54) zylinderförmig mit einem kreisförmigen oder elliptischen Querschnitt ausgestaltet ist, und
wobei die Filtereinheit (22) einen Raum für ein heterogenes Stoffgemisch (20) von einem Filtratraum (21) trennt und mehrere Filterkerzen (24) umfasst, die im Wesentlichen vertikal innerhalb des Gehäuses (12) angeordnet sind und deren Oberflächen mindestens zum Teil als Filterfläche dient, und
wobei die Filtereinheit (22) einen Filterboden (26) umfasst, auf dem die Filterkerzen (24) so montiert sind, dass diese in den Raum für das heterogene Stoffgemisch (20) hineinragen und den Raum für das heterogene Stoffgemisch (20) von dem Filtrat trennen,
**dadurch gekennzeichnet, dass** mit mindestens einem Spülstutzen (46, 47), der an dem Gehäuse (12) in einem unteren Bereich des Mantelabschnitts (48) angeordnet ist, ein Strom eines ersten Waschmediums auf den Filterboden (26) in den Raum für das heterogene Stoffgemisch (20) eingebracht wird, der tangential zu der Mantelfläche (54) gerichtet ist.

13. Verfahren gemäß einem der Ansprüche 12, **dadurch gekennzeichnet, dass** die Filtereinheit (22) über mindestens einer Sprühdüse (52), die sich im Raum für das heterogene Stoffgemisch (20) befindet, mit einem zweiten Waschmedium besprüht wird.

14. Verfahren gemäß einem der Ansprüche 12 oder 13, **dadurch gekennzeichnet, dass** die Filtereinheit (20) über mindestens eine Sprühdüse (52), die an mindestens einem Sprühring (50, 50') oder an mindestens einem Sprüharm (51, 51') angeordnet ist, mit dem zweiten Waschmedium besprüht wird.

## Claims

1. A device (10) for separating a heterogeneous mixture of matter into at least one retentate and one filtrate, comprising
- a housing (12) which is subdivided into a chamber for the heterogeneous mixture (20) of matter having at least one feed (14) and a filtrate chamber (21) having at least one outlet (16), where the housing comprises a shell surface (54) which encloses the chamber for the heterogeneous mixture of matter (20) and the shell surface has a cylindrical configuration with a circular or elliptical cross section,
- a filter unit (22) which is arranged in the chamber for the heterogeneous mixture of matter (20) and comprises multiple filter candles (24) which are arranged substantially vertically within the housing and the surface of which serves at least in part as filter surface, where the filter unit (22) comprises a filter base (26) on which the filter candles (24) are mounted in such a manner that these project into the chamber for the heterogeneous mixture of matter (20) and separate the chamber for the heterogeneous mixture of matter (20) from the filtrate, and
- a rinsing system (46, 47, 50, 50') for cleaning the filter unit (22),
wherein the rinsing system (46, 47, 50, 50') has at least one rinsing port (46, 47) which is arranged on the housing (12) in a lower region of the shell section (48) and is constructed so as to introduce a first washing medium in a stream, oriented tangentially to the shell surface (54) of the housing (12), onto the filter base into the chamber for the heterogeneous mixture of matter.

2. The device according to claim 1, wherein the at least one rinsing port (46, 47) is oriented tangentially to the shell surface (54) of the housing (12).

3. The device according to either of claims 1 and 2, wherein the at least one rinsing port (46, 47) is arranged at any desired angle to the shell surface (54) of the housing (12) and comprises means for deflecting the stream of the first washing medium.

4. The device according to any one of claims 1 to 3, wherein a plurality of rinsing ports (46, 47) are arranged at regular and/or irregular spacings on the shell surface (54) of the housing (12).

5. The device according to any one of claims 1 to 4, wherein the rinsing system (46, 47, 50, 50') comprises at least one spray nozzle (52) which is situated within the housing (12) in the chamber for the heterogeneous mixture (20) of matter.

6. The device according to claim 5, wherein the at least one spray nozzle (52) is mounted so as to be fixed or pivotable.

7. The device according to either of claims 5 and 6, wherein the at least one spray nozzle (52) is placed between a plurality of filter elements (24) and/or above at least one filter element (24).

8. The device according to any one of claims 5 to 7, wherein a plurality of spray nozzles (52) are arranged on at least one spray ring (50, 50') or on at least one spray arm (51, 51') which is situated in the chamber for the heterogeneous mixture (20) of matter.

9. The device according to any one of claims 1 to 8, wherein the filter unit (22) is fixed by at least one holding system (30) within the chamber for the heterogeneous mixture (20) of matter, wherein the at least one holding system (30) is constructed as an open holding system (30).

10. The device according to claim 9, wherein the at least one holding system (30) comprises at least one sleeve (32) which at least in part encloses the at least one filter element (24).

11. The device according to either of claims 9 and 10, wherein the at least one holding system (30) comprises at least one web (34), wherein one or more webs (34) connect at least one sleeve (32) to the housing (12) and/or one or more webs (34) connect at least two sleeves (34) to one another.

12. A method for cleaning a filter unit (22) which is provided in a housing (12), where the housing (12) comprises a shell surface (54) which encloses a chamber for the heterogeneous mixture of matter (20) and the shell surface (54) has a cylindrical configuration with a circular or elliptical cross section, and
where the filter unit (22) separates a chamber for a heterogeneous mixture of matter (20) from a filtrate chamber (21) and comprises multiple filter candles (24) which are arranged substantially vertically within the housing (12) and the surfaces of which serves at least in part as filter surface, and
where the filter unit (22) comprises a filter base (26) on which the filter candles (24) are mounted in such a manner that these project into the chamber for the heterogeneous mixture of matter (20) and separate the chamber for the heterogeneous mixture of matter (20) from the filtrate,
which comprises introducing a stream of a first washing medium by at least one rinsing port (46, 47), which is arranged on the housing (12) in a lower region of the shell section (48), onto the filter base (26) into the chamber for the heterogeneous mixture (20) of matter, which stream is directed tangentially to the shell surface (54).

13. The method according to claim 12, wherein the filter unit (22) is sprayed with a second washing medium via at least one spray nozzle (52) which is situated in the chamber for the heterogeneous mixture (20) of matter.

14. The method according to either of claims 12 and 13, wherein the filter unit (20) is sprayed with the second washing medium via at least one spray nozzle (52) which is arranged on at least one spray ring (50, 50') or on at least one spray arm (51, 51').

## Revendications

1. Dispositif (10) pour la séparation d'un mélange hétérogène de substances en un rétentat et un filtrat, comprenant
- une enceinte (12), qui est divisée en une chambre pour le mélange hétérogène de substances (20) avec au moins une alimentation (14) et une chambre de filtrat (21) avec au moins une évacuation (16), dans lequel l'enceinte comprend une face d'enveloppe (54), qui entoure la chambre pour le mélange hétérogène de substances (20) et la face d'enveloppe est de forme cylindrique avec une section transversale circulaire ou elliptique,
- une unité de filtration (22), qui est disposée dans la chambre pour le mélange hétérogène de substances (20) et qui comprend plusieurs bougies filtrantes (24), qui sont disposées essentiellement verticalement à l'intérieur de l'enceinte et dont la surface sert au moins en partie de face de filtration, dans lequel l'unité de filtration (22) comprend un fond de filtre (26), sur lequel les bougies filtrantes (24) sont montées de telle manière que celles-ci pénètrent dans la chambre pour le mélange hétérogène de substances (20) et séparent la chambre pour le mélange hétérogène de substances (20) du filtrat, et
- un système de rinçage (46, 47, 50, 50') pour le nettoyage de l'unité de filtration (22),
**caractérisé en ce que** le système de rinçage (46, 47, 50, 50') présente au moins une tubulure de rinçage (46, 47), qui est disposée sur l'enceinte (12) dans une région inférieure de la partie d'enveloppe (48) et qui est configurée pour introduire un premier fluide de lavage dans la chambre pour le mélange hétérogène de substances en un courant dirigé tangentiellement à la face d'enveloppe (54) de l'enceinte (12) sur le fond de filtre.

2. Dispositif selon la revendication 1, **caractérisé en ce que** ladite au moins une tubulure de rinçage (46, 47) est orientée tangentiellement à la face d'enveloppe (54) de l'enceinte (12).

3. Dispositif selon une des revendications 1 ou 2, **caractérisé en ce que** ladite au moins une tubulure de rinçage (46, 47) est disposée sous un angle quelconque par rapport à la face d'enveloppe (54) de l'enceinte (12) et comprend des moyens pour dévier le courant du premier fluide de lavage.

4. Dispositif selon l'une quelconque des revendications 1 à 3, **caractérisé en ce que** plusieurs tubulures de rinçage (46, 47) sont disposées à des distances régulières et/ou irrégulières sur la face d'enveloppe (54) de l'enceinte (12).

5. Dispositif selon l'une quelconque des revendications 1 à 4, **caractérisé en ce que** le système de rinçage (46, 47, 50, 50') comprend au moins une buse de pulvérisation (52), qui se trouve à l'intérieur de l'enceinte (12) dans la chambre pour le mélange hétérogène de substances (20).

6. Dispositif selon la revendication 5, **caractérisé en ce que** ladite au moins une buse de pulvérisation (52) est fixée ou est montée de façon pivotante.

7. Dispositif selon une des revendications 5 ou 6, **caractérisé en ce que** ladite au moins une buse de pulvérisation (52) est placée entre plusieurs éléments filtrants (24) et/ou au-dessus d'au moins un élément filtrant (24).

8. Dispositif selon l'une quelconque des revendications 5 à 7, **caractérisé en ce que** plusieurs buses de pulvérisation (52) sont disposées sur au moins une couronne de pulvérisation (50, 50') ou sur au moins un bras de pulvérisation (51, 51'), qui se trouve dans la chambre pour le mélange hétérogène de substances (20).

9. Dispositif selon l'une quelconque des revendications 1 à 8, **caractérisé en ce que** l'unité de filtration (22) est fixée avec au moins un système de maintien (30) à l'intérieur de la chambre pour le mélange hétérogène de substances (20), dans lequel ledit au moins un système de maintien (30) est configuré comme système de maintien ouvert (30).

10. Dispositif selon la revendication 9, **caractérisé en ce que** ledit au moins un système de maintien (30) comprend au moins une douille (32), qui entoure au moins en partie ledit au moins un élément filtrant (24).

11. Dispositif selon une des revendications 9 ou 10, **caractérisé en ce que** ledit au moins un système de maintien (30) comprend au moins une nervure (34), dans lequel une ou plusieurs nervure(s) (34) relie(nt) au moins une douille (32) à l'enceinte (12) et/ou une ou plusieurs nervure(s) (34) relie(nt) deux douilles (34) l'une à l'autre.

12. Procédé de nettoyage d'une unité de filtration (22), qui est prévue dans une enceinte (12), dans lequel l'enceinte (12) comprend une face d'enveloppe (54), qui entoure une chambre pour le mélange hétérogène de substances (20) et la face d'enveloppe (54) est de forme cylindrique avec une section transversale circulaire ou elliptique, et
dans lequel l'unité de filtration (22) sépare une chambre pour un mélange hétérogène de substances (20) d'une chambre de filtrat (21) et comprend plusieurs bougies filtrantes (24), qui sont disposées essentiellement verticalement à l'intérieur de l'enceinte (12) et dont la surface sert au moins en partie de face de filtration, et
dans lequel l'unité de filtration (22) comprend un fond de filtre (26), sur lequel les bougies filtrantes (24) sont montées de telle manière que celles-ci pénètrent dans la chambre pour le mélange hétérogène de substances (20) et séparent la chambre pour le mélange hétérogène de substances (20) du filtrat,
**caractérisé en ce que** l'on introduit dans la chambre pour le mélange hétérogène de substances (20), avec au moins une tubulure de rinçage (46, 47), qui est disposée sur l'enceinte (12) dans une région inférieure de la partie d'enveloppe (48), sur le fond de filtre (26), un courant d'un premier fluide de lavage, qui est orienté tangentiellement à la face d'enveloppe (54).

13. Procédé selon la revendication 12, **caractérisé en ce que** l'on arrose l'unité de filtration (22) avec un second fluide de lavage, au moyen d'au moins une buse de pulvérisation (52), qui se trouve dans la chambre pour le mélange hétérogène de substances (20).

14. Procédé selon une des revendications 12 ou 13, **caractérisé en ce que** l'on arrose l'unité de filtration (20) avec le second fluide de lavage, au moyen d'au moins une buse de pulvérisation (52), qui est disposée sur au moins une couronne de pulvérisation (50, 50') ou sur au moins un bras de pulvérisation (51, 51').
